# EUROPEAN PATENT APPLICATION

(11) **EP 1 827 004 A2**
(43) Date of publication of application: **29.08.2007**
(21) Application number: 07250356.8
(22) Date of filing: 29.01.2007
(51) Int. Cl.: H04N 1/32, H04N 1/387, H04N 1/41, H04N 7/30

(54) **Reading and data compression of long-sized originals**

(30) Priority: 27.01.2006 JP 2006019355; 22.11.2006 JP 2006316021
(71) Applicant: Ricoh Company, Ltd., Tokyo 143-8555 (JP)
(72) Inventor: Morishita, Kouichi, Tokyo (JP)
(74) Representative: Mounteney, Simon James

(57) **Abstract**

A image reader for reading a long-size original includes a division part configured to divide the image data of the read long-size original into multiple files; a compression part configured to compress the image data divided by the division part by a preset standard method; a storage part configured to store the image data compressed by the compression part; and an addition part configured to add data indicating the contents of the image data stored in the storage part to the image data.

## Description

### BACKGROUND OF THE INVENTION

### 1. Field of the Invention

The present invention relates generally to image readers, image forming apparatuses, and file management methods, and more particularly to an image reader that divides a read long-size original into multiple files and stores and manages the files, an image forming apparatus having the image reader, and a method of managing the files in the image reader or the image forming apparatus.

### 2. Description of the Related Art

For example, the disclosure of Japanese Laid-Open Patent Application No. 2001-069273 is known as this type of technique. According to this technique, the documents transmitted or received by digital multifunction machines, particularly those having a facsimile function, are provided with bookmarks that make it possible to identify the documents, thereby facilitating document management. In digital multifunction machines with a facsimile machine having an image editing function, part of an image is enlarged or reduced, and the enlarged or reduced part of the image is registered as a bookmark. It is also disclosed that the registered bookmark is employed as an image mark of a connected computer, such as an icon or thumbnail, at the time of use.

According to the technique of Japanese Laid-Open Patent Application No. 2001-069273, a data area to be desired to be employed as a bookmark is specified in a read original, and the data read by a scanner are stored in an image memory on a main computer after being subjected to various image processing operations in an image processing controller. On the other hand, the bookmark registered data are transmitted from a bookmark processing controller to an enlargement/reduction unit to be converted into a desired bookmark size, and are stored in a bookmark data storage memory. In the case of storing multiple bookmark data items in the bookmark data storage memory, it is possible to specify a bookmark for each counterpart of transmission or reception by correlating the bookmark data items with corresponding destination information using a management information unit, and it is possible to distinguish the transmission or reception orders of documents by changing the mark position for each transmission or reception, thereby performing so-called transmission/reception file management.

In the case of storing image data or adding marks, data reading is performed either with or without compression. In the case of first reading data without compression and thereafter compressing the read data, it is necessary to reduce the amount of memory used anyway because a large amount of memory is used to store the data before compression.

On the other hand, in the case of compressing and reading data, no problem is caused with an algorithm unique to an apparatus while the data are used in the same apparatus. However, in the case of transmitting the read data to a different type of apparatus, it is necessary to convert the data in a standard image format such as JPEG (Joint Photographic Experts Group). Accordingly, the data should be treated as a standard image from the time the image is stored.

In general, the JPEG image format is used as a standard format for still color images. According to the JPEG image format, however, the information of a header part representing image size is only up to 16 bits, so that it is impossible to handle a long-size image using a standard header.

### SUMMARY OF THE INVENTION

Embodiments of the present invention may solve or reduce the above-described problem.

According to one aspect of the present invention, it is possible to handle an image larger than standard management size, such as the read image of a long-size original, with a standard image format that can be handled in other printers or personal computers.

According to one embodiment of the present invention, there is provided an image reader reading a long-size original including a division part configured to divide image data of the read long-size original into a plurality of files; a compression part configured to compress the image data divided by the division part by a preset standard method; a storage part configured to store the image data compressed by the compression part; and an addition part configured to add data indicating contents of the image data stored in the storage part to the image data.

According to one embodiment of the present invention, there is provided an image forming apparatus including the image reader as set forth above.

According to one embodiment of the present invention, there is provided a file management method in an image reader reading and managing a long-size original, the method including dividing image data of the read long-size original into a plurality of files; compressing the divided image data by a preset standard method; adding data indicating contents of the compressed image data to the compressed image data and storing the compressed image data; and specifying a necessary image based on the data indicating the contents upon reading the stored image data.

According to one aspect of the present invention, the image data of a read long-size original are divided into multiple files, the divided image data are compressed by a preset standard method, and the compressed image data are stored with data indicating the contents of the image data being added thereto. Accordingly, the read image of the long-size original, which is an image larger than standard management size, can be handled with a standard image format that can be handled in other printers or personal computers.

### BRIEF DESCRIPTION OF THE DRAWINGS

Other objects, features and advantages of the present invention will become more apparent from the following detailed description when read in conjunction with the accompanying drawings, in which:
FIG. 1 is a schematic diagram showing a multifunction digital copier according to an embodiment of the present invention;
FIG. 2 is a diagram for illustrating an operations part of the multifunction digital copier shown in FIG. 1 according to the embodiment of the present invention;
FIG. 3 is a block diagram for illustrating a control of the multifunction digital copier shown in FIG. 1 according to the embodiment of the present invention;
FIG. 4 is a block diagram for illustrating an image processing part of the multifunction digital copier shown in FIG. 1 according to the embodiment of the present invention;
FIG. 5 is an explanatory diagram showing the state where a long-size original is divided, read, and compressed to be converted into files according to the embodiment of the present invention;
FIG. 6 is an explanatory diagram showing the state of performing conversion into a file while handling up to a maximum number of lines manageable according to JPEG according to the embodiment of the present invention;
FIG. 7 is a block diagram for illustrating an overall operation in a file processing controller according to the embodiment of the present invention;
FIG. 8 is an explanatory diagram showing the state where image data are divided with the length of a desired read image size determined by a user being the same as in the case of reading an original of a standard size according to the embodiment of the present invention;
FIG. 9 is an explanatory diagram showing the state where another operation overlaps reading so that a necessary amount of memory cannot be reserved for the reading in the case of reading image data, and the number of lines for division of the image is changed so as to switch to an operation that can perform reading with a smaller amount of memory, thereby dividing the image data into files according to the embodiment of the present invention;
FIG. 10 is a flowchart showing a processing procedure in the file processing controller in the case of filling a necessary number of pixels or lines as a multiple of eight with dummy data at the time of division according to the embodiment of the present invention;
FIG. 11 is a conceptual diagram showing a file format of compressed image data stored in a memory according to the embodiment of the present invention;
FIG. 12 is an explanatory diagram showing information written into JPEG markers according to the embodiment of the present invention;
FIG. 13 is a block diagram showing a processing flow in the case of adding header information according to the embodiment of the present invention;
FIG. 14 is a flowchart showing a processing procedure of division size determination and compression according to the embodiment of the present invention;
FIG. 15 is an explanatory diagram showing generation of reduced images for identifying the contents of a read image on an operations panel or in a personal computer with the same proportions as corresponding divided (divisional) read images according to the embodiment of the present invention;
FIG. 16 is a block diagram showing a processing flow in the case of forming a thumbnail image or a preview image according to the embodiment of the present invention;
FIG. 17 is a block diagram showing a processing flow corresponding to the processing of FIG. 9 according to the embodiment of the present invention;
FIG. 18 is a diagram showing an example relationship between an image on a long-size original and a preview image according to the embodiment of the present invention;
FIG. 19 is a flowchart showing an overall control procedure regarding JPEG compression executed in the file processing controller according to the embodiment of the present invention; and
FIG. 20 is a flowchart showing a control procedure for determining the number of lines for division in consideration of the available capacity of a memory and performing JPEG compression at the time of storing image data according to the embodiment of the present invention.

### DETAILED DESCRIPTION OF THE PREFERRED EMBODIMENTS

A description is given, with reference to the accompanying drawings, of an embodiment of the present invention.

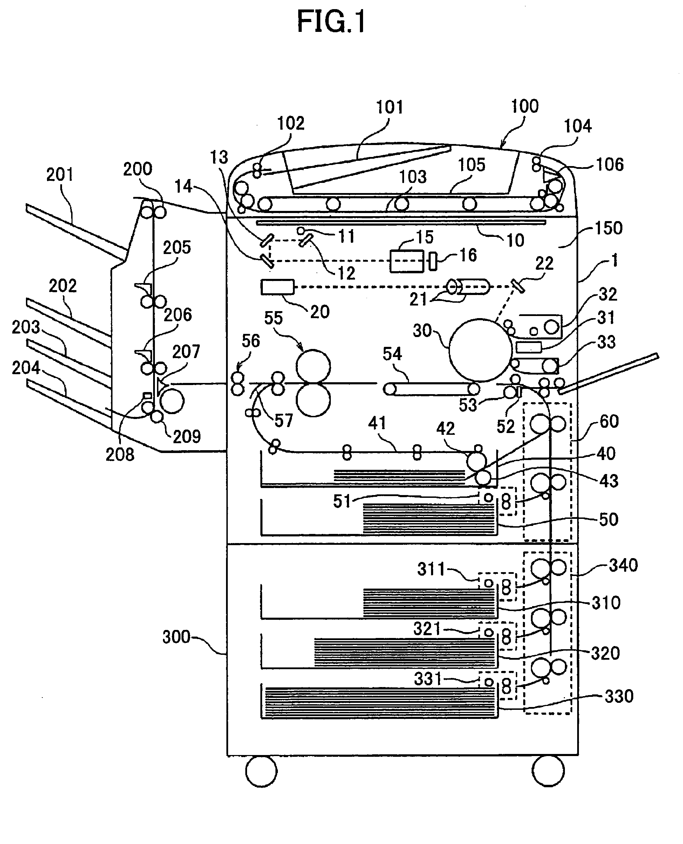

FIG. 1 is a schematic diagram showing a multifunction digital copier according to the embodiment of the present invention. The multifunction digital copier includes a copier main body 1, an automatic document feeder (ADF) 100, a 3-bin sorter 200, and a paper feed unit (hereinafter, bank) 300.

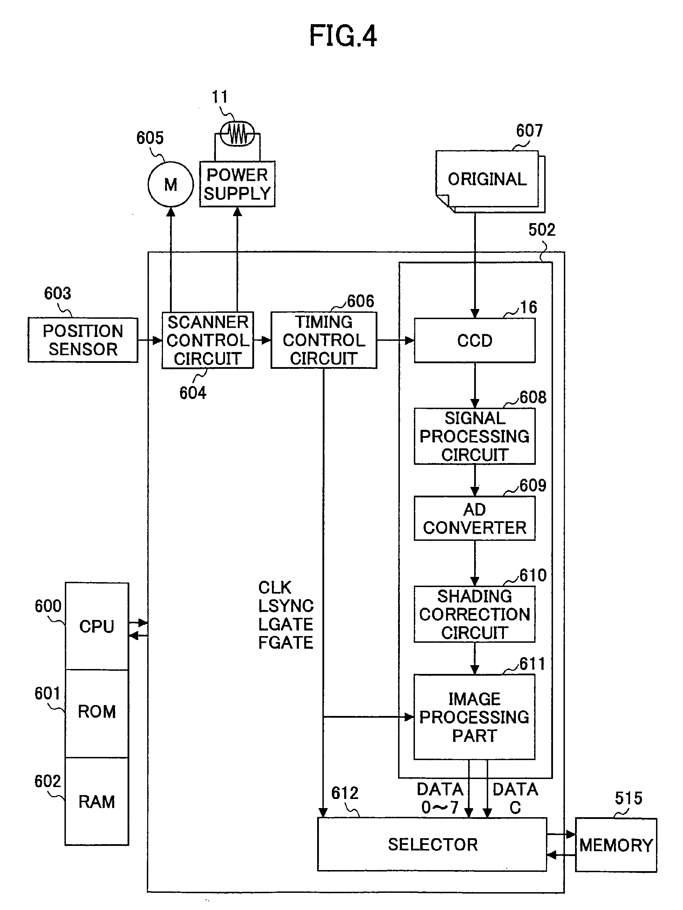

The copier main body 1 includes a scanner (image reader) 150, an image processing part 611 (FIG. 4), and a plotter. The scanner 150 includes a contact glass 10 for placing an original and an optical scanning system. The optical scanning system includes an exposure lamp 11, a first mirror 12, a second mirror 13, a third mirror 14, a lens 15, and a full-color CCD 16. The optical scanning system includes a first carriage and a second carriage. The first carriage, which has the exposure lamp 11 and the first mirror 12, is driven by a stepper motor to move at a constant speed at the time of reading the original. The second carriage, which has the second mirror 13 and the third mirror 14, is driven by a stepper motor to move at half the speed of the first carriage at the time of reading the original. The original (not graphically illustrated) on the contact glass 10 is optically scanned by these first and second carriages so as to be focused onto the CCD 16 through the exposure lamp 11, the first mirror 12, the second mirror 13, the third mirror 14, and the lens 15 and subjected to photoelectric conversion.

The image signal divided into red (R), green (G), and blue (B) colors by the CCD 16 is subjected to AD (analog-to-digital) conversion by an AD converter 609 shown in FIG. 4 to be output to the image processing part 611 performing image processing. The image processing part 611 converts the image signal from the AD converter 609 into a digital signal with various image processing operations (such as binarization, conversion into multiple levels, reduction/enlargement, and editing). A write unit includes a laser output unit 20, an fθ lens 21, and a mirror 22. A laser diode serving as a laser light source and a polygon motor are provided inside the laser output unit 20.

A black image signal output from the image processing part 611 is converted into laser light having intensity corresponding to this image signal. The laser light is shaped into a light beam of a predetermined form by a collimator lens, an aperture, and a cylindrical lens and emitted onto the polygon motor to be output from the laser output unit 20. The laser light output from the laser output unit 20 is emitted onto a photosensitive body drum 30 through the fθ lens 21 and the mirror 22. Further, the laser light passing through the fθ lens 21 is emitted onto a beam sensor that is disposed outside an image area and generates a main scanning synchronization detection signal (PMSYNC).

The laser light is emitted onto the photosensitive body drum 30 electrically charged by a first charging unit, so that an electrostatic latent image is formed. The electrostatic latent image is developed into an image on the photosensitive body drum 30 by a black developer unit 32. Thereafter, the photosensitive body drum 30 is recharged with a second charging unit. A red image signal output from the image processing part 611 is buffered for write position alignment with the black image signal and transmitted to an LED write unit 31. The LED write unit 31 emits LED light onto the photosensitive body drum 30 based on the red image signal so as to form an electrostatic latent image of the second color, so that an image is formed on the photosensitive body drum 30 with a second developer unit 33.

The ADF 100 feeds one sheet (of paper, for example) of the original after another onto the contact glass 10 of the copier main body 1, and outputs the sheets after copying. The sheets of the original (original sheets) are stacked on an original paper feed table 101 and aligned widthwise by a side guide. The original sheets are separated one from another and fed, the bottom one first, by paper feed rollers 102 so as to be conveyed onto the contact glass of the copier main body 1 by a conveyor belt 103. The original sheet on the contact glass 10 is output onto a paper output tray 105 by the conveyor belt 103 and paper output rollers 104 after completion of reading.

In the case of reading a duplex-printed original, the duplex original sheets are separated one from another and fed, the bottom one first, by the paper feed rollers 102 so as to be conveyed onto the contact glass of the copier main body 1 by the conveyor belt 103. The original sheet is set on the contact glass 10 after being reversed by a reversal claw 106. After reading the bottom side of the original sheet, the original sheet is conveyed by the conveyor belt 103, and is set on the contact glass 10 after being reversed by the reversal claw 106. After reading the top side of the original sheet, the original sheet is output onto the paper output tray 105 by the conveyor belt 103 and the paper output rollers 104.

Transfer paper sheets (also collectively referred to as "transfer paper") stacked in a first tray 50, a second tray 310, a third tray 320, and a fourth tray 330 are fed by a first paper feeder 51, a second paper feeder 311, a third paper feeder 321, and a fourth paper feeder 331, respectively, to be conveyed by a bank vertical conveyance unit 340 and a main body vertical conveyance unit 60. When the leading edge of the transfer paper is detected by a registration sensor 52, the transfer paper stops at a registration roller 53 after being conveyed for a certain time.

The transfer paper is fed out to the surface of the photosensitive body drum 30 in time with the leading edge of an image enabling signal (FGATE), and an image is transferred onto the transfer paper by a transfer charger. The transfer paper having the image transferred thereonto is separated from the photosensitive body drum 30, and is thereafter conveyed by a conveying unit 54 to have the image fixed thereon by a fixation unit 55 having a fixation roller and a pressure roller. Then, the transfer paper is output onto the 3-bin sorter 200 by paper output rollers 56.

In the case of performing duplex printing using a duplex unit 40, the transfer paper from the fixation unit 55 is guided to a duplex conveyance path 41 by a switching claw 57, and passes through a feed roller 42 and a separation roller 43 to be stored in a duplex tray. The transfer paper stored in the tray comes into contact with the feed roller 42 as the tray moves upward, and is fed to the main body vertical conveyance unit 60 by the rotation of the feed roller 42. The transfer paper fed to the main body vertical conveyance unit 60 is refed to the registration roller 53, and thereafter, printing is performed on the bottom side of the transfer paper.

The 3-bin sorter 200 includes a first paper output tray 201, a second paper output tray 202, a third paper output tray 203, and a reversal-only tray 204, and each of the trays 201 through 204 is configured to receive the transfer paper output reversed. In the case of top-side paper outputting, the transfer paper output from the copier main body 1 is guided toward a preset one of the paper output trays 201 through 203 by a switching claw 207, and is output thereonto. When the transfer paper is output onto the second paper output tray 202, a second tray switching claw 205 operates. When the transfer paper is output onto the third paper output tray 203, a third tray switching claw 206 operates. Thereby, the transfer paper is guided.

In the case of reversing and outputting the transfer paper, the transfer paper sheet is guided toward the reversal-only tray 204 by the switching claw 207. When the trailing edge of the transfer paper passes a reversal detection sensor 208, conveyor rollers 209 are reversed so that the transfer paper is guided toward a preset one of the paper output trays 201 through 203 and is output thereonto. Further, the first paper output tray 201 is provided with a function of shifting the tray 201 forward and backward and a function of shifting the tray 201 upward and downward. The forward-backward shifting function is used in the case of sorting transfer paper sheets, and the upward-downward shifting function is used to stack a large number of transfer paper sheets while ensuring paper alignment.

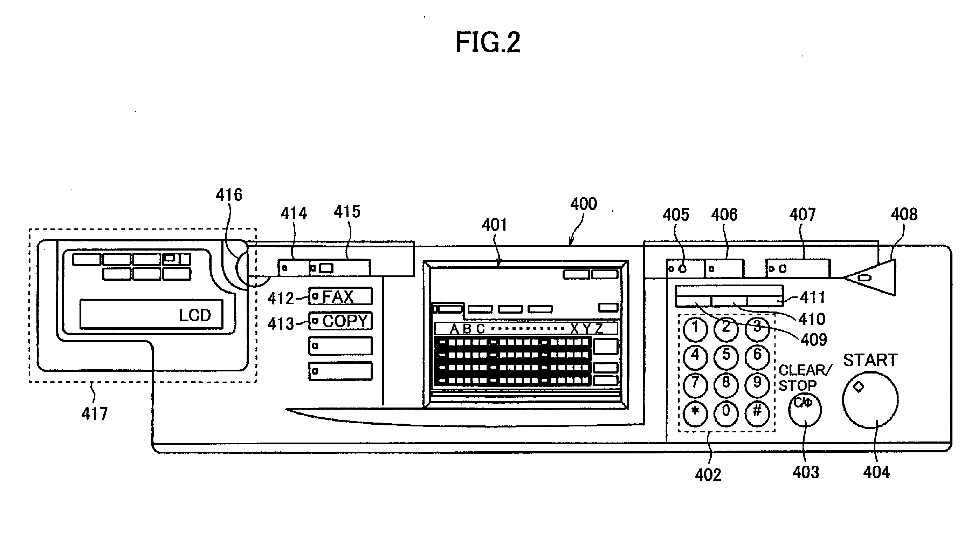

FIG. 2 is a diagram for illustrating an operations part 400 of the multifunction digital copier shown in FIG. 1 according to the embodiment of the present invention. A liquid crystal display part of 400 × 256 dots is provided in the center of the operations part 400. This liquid crystal display part 401 is a touch panel having a transparent electrode disposed in a lower layer thereof, and serves as an operations panel to which inputs are made by pressing on the liquid crystal display part 401. The liquid crystal display part 401 displays functions such as copying and facsimile incorporated into the multifunction digital copier. Users can operate the multifunction digital copier in accordance with this display.

On the right side of the liquid crystal display part 401, there are disposed various keys such as numeric keys 402, a clear/stop key 403, a start key 404, a program key 405, a job recall key 406, a mode clear/preheat key 407, and an interrupt key 408; and various function keys 409, 410, and 411.

On the left side of the liquid crystal display part 401, there are provided a FAX (facsimile) switch key 412, a copying switch key 413, an initial setting key 414, a guidance key 415, and an LCD density control volume 416. On the left side of these, there is further provided a display part 417 used to provide FAX or reading settings.

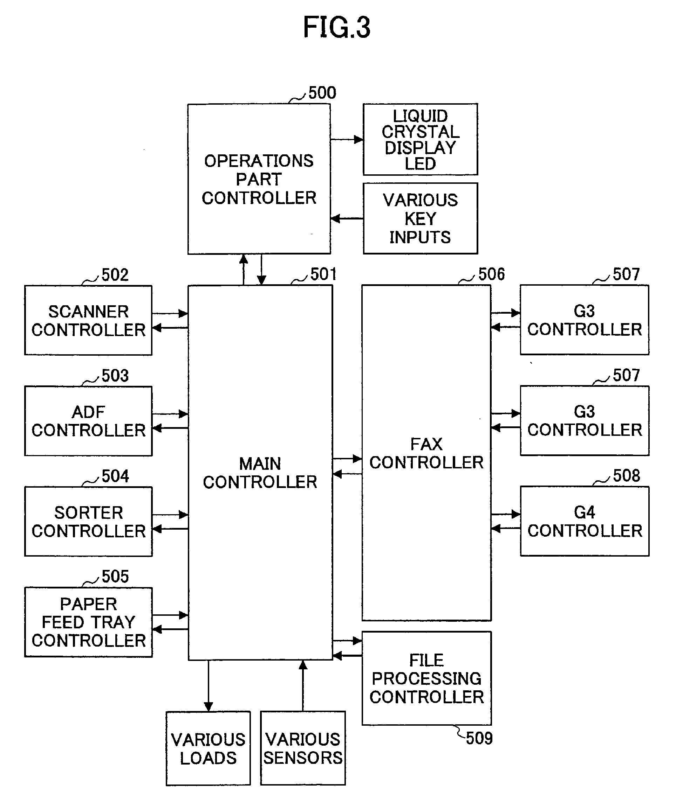

FIG. 3 is a block diagram for illustrating a control of the multifunction digital copier shown in FIG. 1 according to the embodiment of the present invention. The control of the copier main body 1 includes an operations part controller 500 that performs liquid crystal display, control of various LEDs, and control of various key inputs; a main controller 501 that performs paper feeding, conveyance, fixation, duplex printing, and process control; a scanner controller 502 that performs image control/scanner reading control; an ADF controller 503 that performs ADF control; a sorter controller 504 that performs 3-bin sorter control; a paper feed tray controller 505 that performs paper feed unit control; a FAX controller 506 that performs facsimile transmission and reception management and file management; G3 controllers 507 that perform G3 protocol control; a G4 controller 508 that performs G4 protocol control; and a file processing controller 509 that performs file data management control.

FIG. 4 is a block diagram for illustrating part of the multifunction digital copier shown in FIG. 1, which part performs image processing, according to the embodiment of the present invention. Receiving an instruction to start reading from the main controller 501, a CPU 600 of the scanner controller 502 transmits the instruction to a scanner control circuit 604. The scanner control circuit 604 turns on the exposure lamp 11 and causes the first carriage and the second carriage to move to reading reference positions by causing a motor 605 to operate. After detecting an original 607 with a position sensor 603, the scanner control circuit 604 starts reading. At this point, the scanner control circuit 604 creates a sub scanning enabling period signal (FGATE) (active at the start of reading and negative at the end of reading), and transmits the sub scanning enabling period signal to a timing control circuit 606. The timing control circuit 606 generates and outputs an image synchronization clock signal (CLK), a main scanning synchronization signal (LSYNC), and a main scanning enabling signal (LGATE). A ROM 601 stores the programs and static data of the CPU 600. A RAM 602 functions as a memory that the CPU 600 uses in executing a program.

The flow up to outputting an image is as follows. The document 607 placed on the contact glass 10 is illuminated with the exposure lamp 11, and the light reflected therefrom is focused onto the color CCD 16. An analog signal divided into red (R), green (G), and blue (B) by the color CCD 16 is amplified and subjected to light amount correction by a signal processing circuit 608, is converted into a digital multilevel signal by the AD converter 609, and is subjected to shading correction by a shading correction circuit 610, so as to be transmitted to the image processing part 611. In the image processing part 611, basic image quality processing such as MTF correction, γ correction, black image generation, color image generation, binarization, and multilevel processing, as well as digital-specific image processing such as reduction/enlargement, editing, and marker detection are performed, so that black data (DATA 0-7) and color data (DATA C) are output. Thus far is described the function as the scanner 150.

The image data output from the image processing part 611, the synchronization signal generated in the timing control circuit 606, and a write reference signal (PMSYNC) are input to an image selector 612. The image selector 612 outputs image data processed in the image processing part 611 to, for example, a memory 515 described below based on a predetermined selection signal. Further, the image selector 612 reads out image data stored in the memory 515, which are used as write image data.

A description is given below of file management in the multifunction digital copier having the scanner 150.

According to this embodiment, the file management is performed by the file processing controller 509. JPEG is commonly used for compression of color still images. The JPEG file is configured by a collection of data units called segments. The segment is configured by a marker that represents a segment type, segment size, and segment data. Here, the marker uses 2 bytes, the size uses 2 bytes, and the data use an indefinite number of bytes. The marker has a byte sequence of "FF XX," where being a marker is confirmed by "FF" and the segment type is determined by the second byte "XX."

Among several essential segments as a JPEG file, an SOF (Start of Frame) segment is determined by the compression method and image format of a JPEG image. Information on the height and width (the number of vertical pixels and the number of horizontal pixels) of the image is recorded in this SOF segment. However, there is the restriction that both vertical and horizontal sizes can be expressed only up to 16 bits. In addition to the essential segments, there are optionally usable JPEG markers as follows:
0xFF 0xE0 - 0xFF 0xEF APPn Reserved for Application segments
0xFF 0xFE COM Comment
where APPn is an application marker segment (for embedding information necessary to an upper application of JPEG in a JPEG file), and COM is a comment marker (with which a comment up to 32,768 characters [32 KB] can be added by entering text in the image comment). Neither one directly affects compression and decompression of a JPEG image.

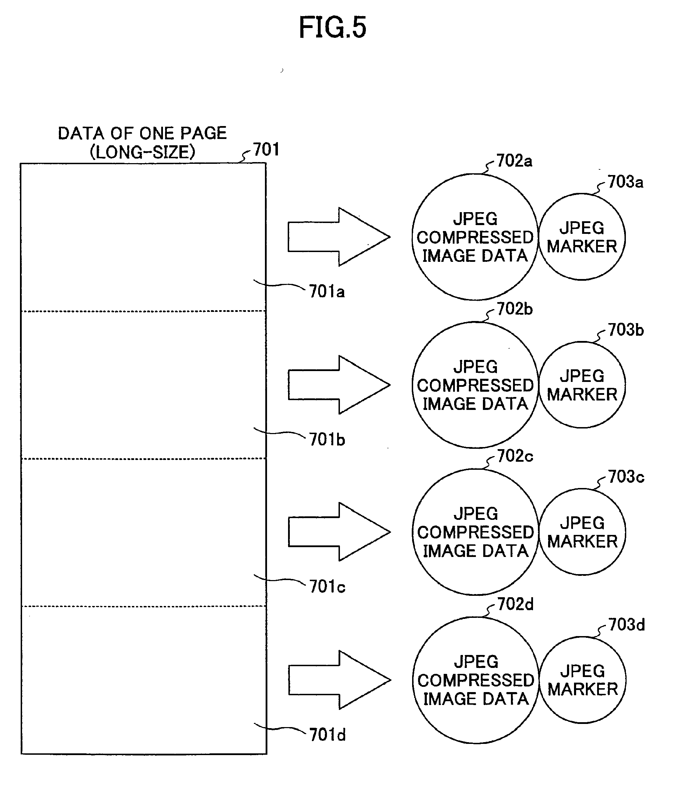

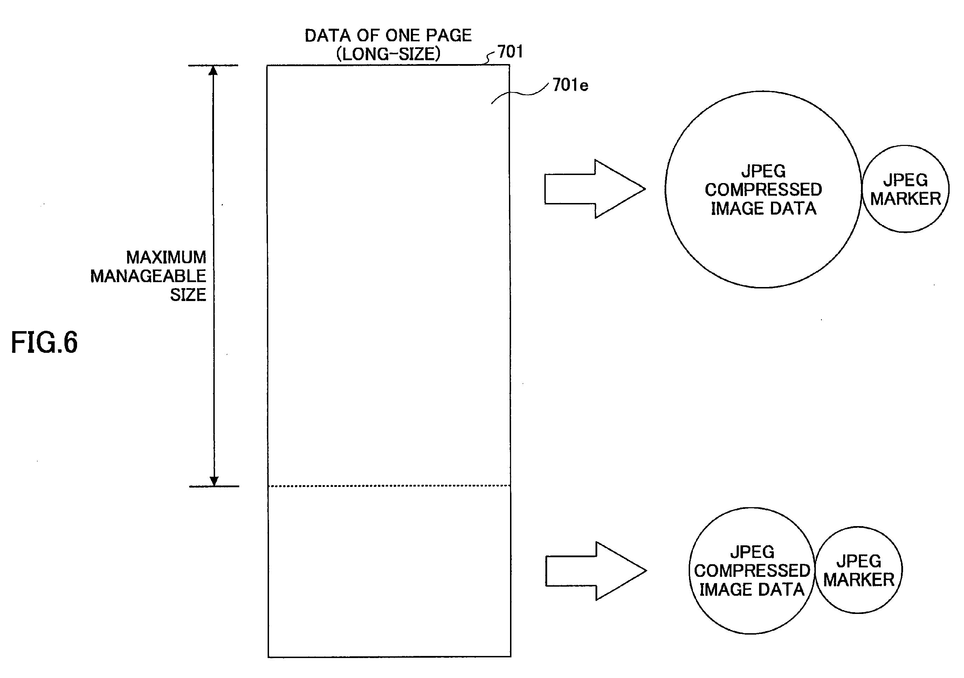

The length of an image that can be managed with a standard JPEG marker can be expressed only up to 16 bits. Accordingly, at the time of reading at 600 dpi, only up to 65535 × (25.4 mm/600) = 2774 mm can be managed with 16 bits (65535 lines). Therefore, as shown in FIG. 5, which is an explanatory diagram showing the state where a long-size original is divided, read, and compressed to be converted into files, a long-size original 701 is divided into multiple files (divisional files) 701a, 701b, 701c, and 701d, which are compressed and stored as JPEG image compressed data items 702a, 702b, 702c, and 702d. In the case of management, as shown in FIG. 6, which is an explanatory diagram showing the state of performing conversion into a file while handling up to a maximum number of lines manageable according to JPEG, it is possible to handle up to a maximum number of lines manageable according to JPEG 701e. As a characteristic operation other than this, compression is performed in units of eight pixels according to JPEG. Therefore, in actual use, JPEG compression is performed by performing file division (creating a divisional file) every time 65,528 lines, which is a multiple of eight, are read.

In the case of managing compressed image data, it is necessary for the contents of the compressed data to be identified. Accordingly, JPEG markers 703a, 703b, 703c, and 703d are added to the JPEG compressed image data items 702a, 702b, 702c, and 702d, respectively, as header information.

At the time of recording the markers of the JPEG image of read image data, information such as:
(a) flag information indicating existence of the next divisional file;
(b) reference information including a file name indicating the next successive file;
(c) flag information indicating the beginning of divisional files; and
(d) flag information indicating the end of divisional files is recorded in the comment marker (COM) or the application marker segment (APPn).
   Further, after reading all the image, information such as:
(e) the number of divisions (divisional files);
(f) total image size; and
(g) total data amount
is optionally recorded in the JPEG marker of the first file of the stored data. This facilitates management of the size and the total data amount of the entire image.

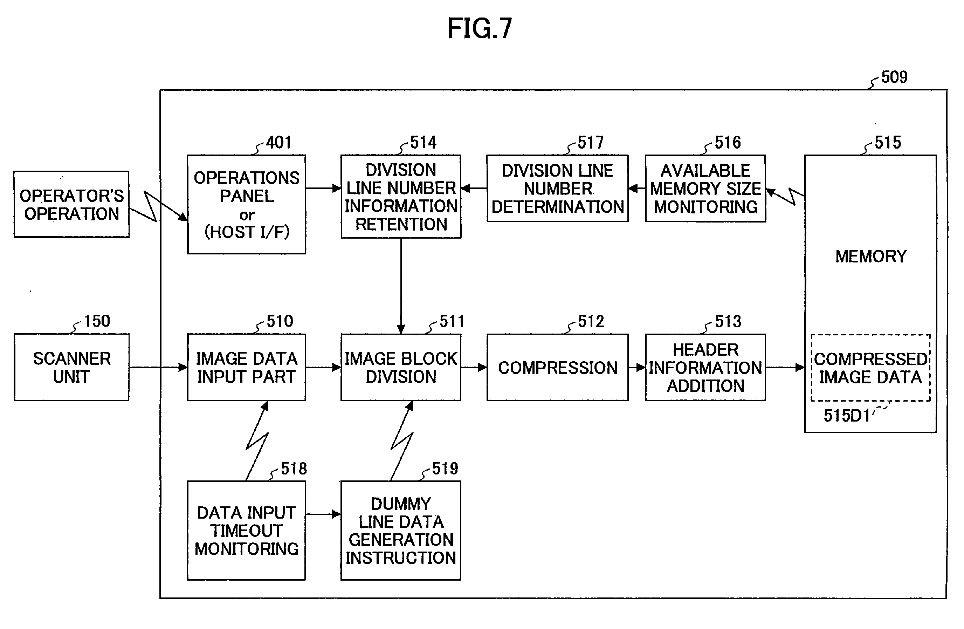

FIG. 7 is a block diagram for illustrating an overall operation in the file processing controller 509. In the file processing controller 509, an image block division part 511, a compression part 512, a header information addition part 513, and a division line number information retention part 514 perform respective operations on image data input to an image data input part 510 from the scanner unit 150. The image data subjected to these operations are stored in the memory 515. In the case of performing this image data storing operation, an extremely large amount of data should be read at a time. Therefore, as described above, the image data are divided and read on the basis of a desired image size to be stored as the JPEG compressed data items 702a, 702b, 702c, and 702d, which are provided with the JPEG markers 703a, 703b, 703c, and 703d, respectively (FIG. 5), to be stored in the memory 515 as compressed image data 515D1.

The size of division (division size) may be determined as desired by a user (operator) from, for example, the liquid crystal display part (operations panel) 401 of the operations part 400, and is retained in the division line number information retention part 514. Every time image data of the number of lines specified by the user are read, the image data are subjected to file division (divided into files) in the image block division part 511, and the divided image data are compressed in the compression part 512 and stored. In the case of employing JPEG as a compression algorithm, the image data are divided at line numbers that are multiples of eight because compression is performed in units of eight pixels. According to this embodiment, inputs are made from the operations panel 401 of the operations part 400 because the multifunction digital copier 1 is illustrated. However, if the scanner 150 is locally connected to a PC or the multifunction digital copier 1 is connected to a PC through a network, it is also possible to make inputs from the PC side. Further, the image data divided in the image block division part 511 are read in the scanner unit 150 and input from the image data input part 510.

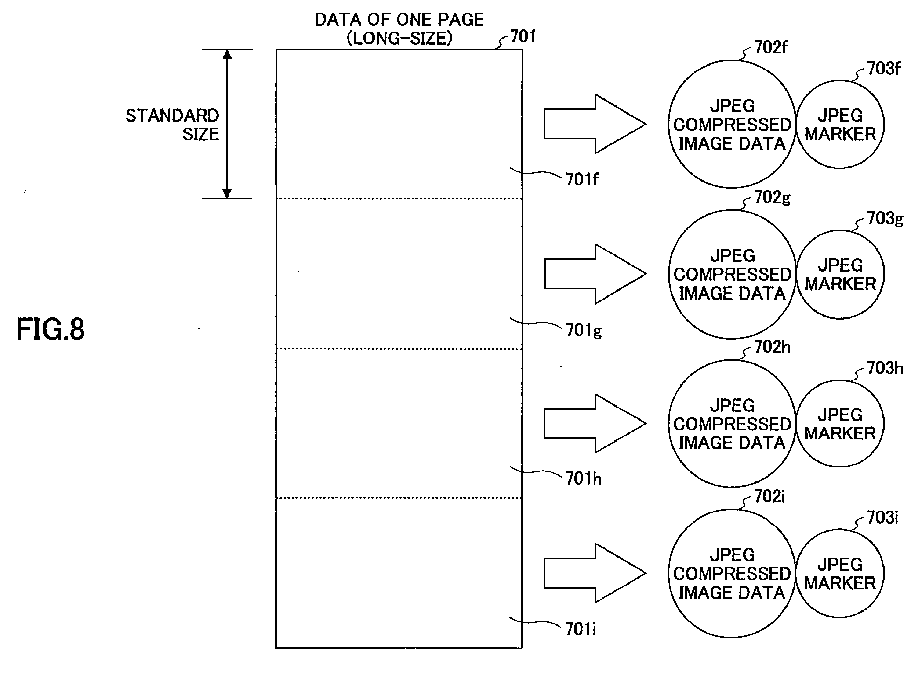

If the image size at the time of division selected or determined as desired by a user as described above is the same as the maximum read length of a standard size in reading, the internal processing can be performed the same as in the case of the standard size. Therefore, the image data are divided with the length of the desired read image size determined by the user being the same as in the case of reading an original of a standard size as shown in FIG. 8. That is, in the case of a scanner with an ADF (Automatic Document Feeder), which scanner can read A3 size and support up to A4 size LEF (Long Edge Feed) in read width, the read long-size original (file) 701 is divided into files 701f, 701g, 701h, and 701i in units of 210 mm if the user-determined image size for division is the same as A4 size LEF or in units of 420 mm if the user-determined image size for division is the same as A3 size SEF (Short Edge Feed). The read image data of the files 701f, 701g, 701h, and 701i are provided with JPEG markers 703f, 703g, 703h, and 703i, respectively, to be stored as JPEG compressed image data items 702f, 702g, 702h, and 702i.

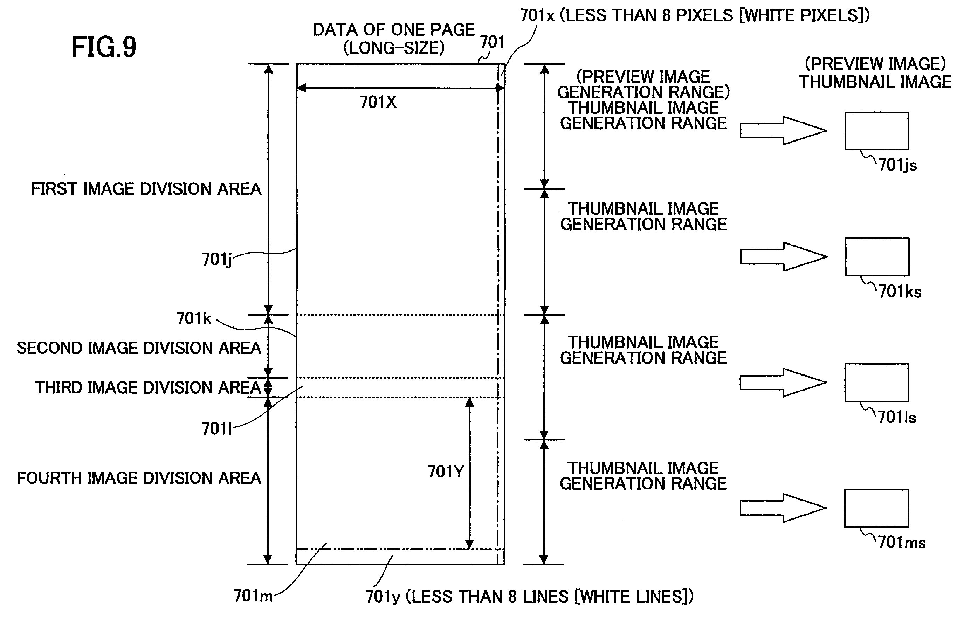

FIG. 9 is a diagram showing the case where the image data of a long-size original are divided into different amounts. If another operation overlaps reading so that a necessary amount of memory cannot be reserved for the reading in the case of reading image data while dividing the image data as shown in FIG. 5, the number of lines for division of the image is changed so as to switch to an operation that can perform reading with a smaller amount of memory. FIG. 9 shows a first image division area 701j, a second image division area 701k, a third image division area 7011, and a fourth image division area 701m. If it becomes possible to reserve memory during the reading operation, the read image size is increased within the range of a maximum read size (701e of FIG. 6). Whether the above-described necessary amount of memory can be reserved is determined by monitoring an available memory amount in the memory 515 with an available memory size monitoring part 516 as shown in FIG. 7. If the necessary amount of memory cannot be reserved, the number of lines for division of the image is changed in a division line number determination part 517, and the division line number information retention part 514 is notified of the changed (updated) number of lines. As a result, the image block division part 511 performs division based on the changed number of lines.

The number of lines is counted from the number of read lines, but may also be obtained by counting the number of scan lines. At this point, if a device with a scanner I/F and a device that generates a JPEG image are different, the device that generates the JPEG image receives in advance information as to how much data of an image width 701X are to be transferred from the device with the scanner I/F in pixels, and divides received data by the image width 701X and treats each divided data item as data for one line. When the amount of data of "image width × 8" has been transferred, the transferred data are treated as data of eight lines. If the image width 701X received is not a multiple of eight, one or more white pixels are added to less than eight pixels 701x as dummy data as shown in FIG. 9 so that compression can be performed in increments of eight pixels. That is, if the image width 701X received is not a multiple of eight, dummy data (white pixel data) are added at the receiver end so as to make the image width 701X a multiple of eight.

Likewise, if the number of lines received is not a multiple of eight, white line data are added so as to make the number of lines received a multiple of eight, which is the number of pixels that can be handled in JPEG. As described above, JPEG compression is performed in units of eight pixels. Therefore, in actual use, the image block division part 511 performs file division and JPEG compression every time 65,528 lines, which is a multiple of eight, are read. At this point, if the last divisional block of the image is less than the compressible unit of eight lines, the image block division part 511 adds dummy line data (white image data) so as to make the number of lines of the last divisional block subjectable to division, and transmits the divisional image data to the compression part 512. The image data input to the image data input part 510 are monitored in a data input timeout monitoring part 518 shown in FIG. 7. If there is a certain period of no image data input at the time of inputting image data of a non-standard size, such as long-size image data, the data input timeout monitoring part 518 determines this as the trailing edge of paper, and detects the end (trailing) edge of the long-size paper in the sub scanning direction. The paper size is determined by this detection of the trailing edge of the long-size paper. If the last divisional block of the image is less than eight lines, a dummy line data generation instruction part 519 instructs the image block division part 511 to generate and add dummy data to make up for a necessary number of lines to make the number of lines eight.

That is, if the number of lines (from the first one to the last one) 701Y of the fourth image division area (last division block) 701m of the image is not a multiple of eight and needs one or more lines 701y to become a multiple of eight as shown in FIG. 9, the lines 701y necessary to make the number of lines 701Y a multiple of eight are filled with dummy data (white image data). As a result, the number of lines of the last division block 701m becomes a multiple of eight so that the last division block 701m is subjectable to JPEG compression.

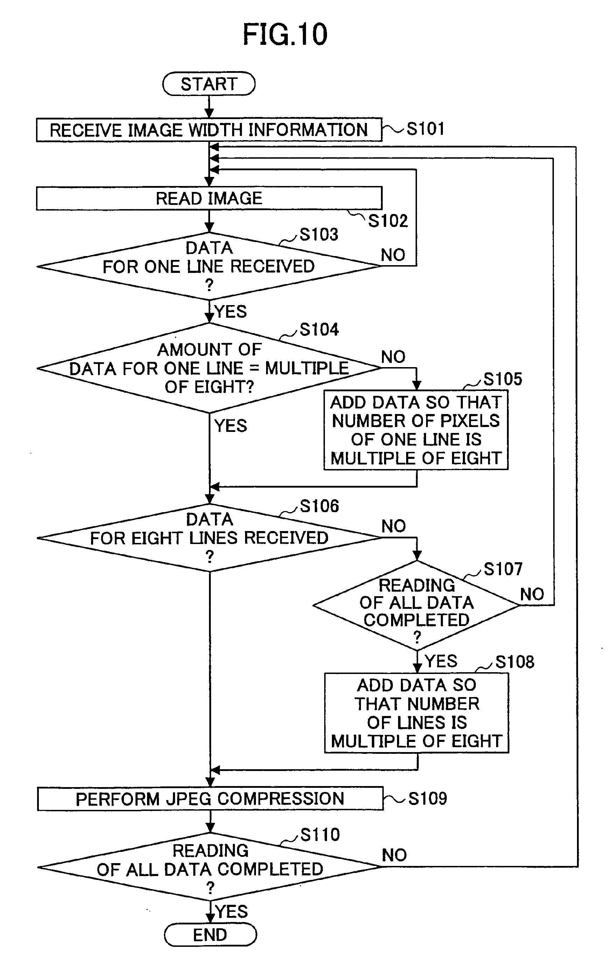

FIG. 10 is a flowchart showing such a processing procedure in the file processing controller 509. According to this processing procedure, first, in step S101, the image data input part 510 receives image width information from a scanner I/F, and thereafter in step S102, reads an image. In step S103, it is determined whether the image data input part 510 has completed reception of data for one line. In the case of YES in step S103, in step S104, it is determined whether the amount (number of pixels) of the received one-line data is a multiple of eight. In the case of YES in step S104, in step S106, it is further determined whether the image data input part 510 has received data for eight lines. If it is determined in step S104 that the amount of the received one-line data is not a multiple of eight (NO in step S104), in step S105, dummy (white pixel) data are added so as to make the number of pixels of the one line a multiple of eight, and in step S106, it is determined whether the received data are eight lines' worth.

When it is determined in step S106 that eight lines' worth of data have been received, in step S109, JPEG compression is performed. If eight lines' worth of data have not been received in step S106, in step S107, the processing of steps S102 through S106 are repeated until reading of eight lines' worth is completed, and when data of eight lines' worth have been received, in step S109, JPEG compression is performed. If data of eight lines' worth have not been received in step S106, but all data have been read (YES in step S107), in step S108, dummy data (white image data) are added so that the number of lines becomes a multiple of eight, and then in step S109, JPEG compression is performed. If it is determined in step S110 that reading of all data is completed (YES in step S110), the processing ends.

That is, the amount of data for one line is set to be a multiple of eight, and compression is performed every time data for eight lines have been received (step S102 → ... → step S106 → step S109 → step S110 → step S102 ...). If the last block is less than eight lines (NO in step S106), dummy (white image) data are added so as to make the number of lines a multiple of eight when reading of all data is completed (step S108) so that JPEG compression is performable. Then, in step S109, JPEG compression is performed.

According to this embodiment, the number of pixels for one line and the number of lines are multiples of eight because compression is performed in units of 8 × 8 pixels according to the JPEG standard. If a different compression standard is employed, the number of pixels and the number of lines of dummy data to be added change accordingly. Therefore, generally speaking, in the case of performing compression in units of *n* × *n* pixels (where *n* is a positive integer greater than or equal to two), dummy data necessary to make the number of pixels of one line a multiple of *n* if the number of pixels of one line is not a multiple of *n*, and if the number of lines of the last division block of an image area to be divided is not a multiple of *n*, dummy data for lines necessary to make the number of lines of the last block a multiple of *n* are added so as to make it possible to perform compression on a block-by-block basis.

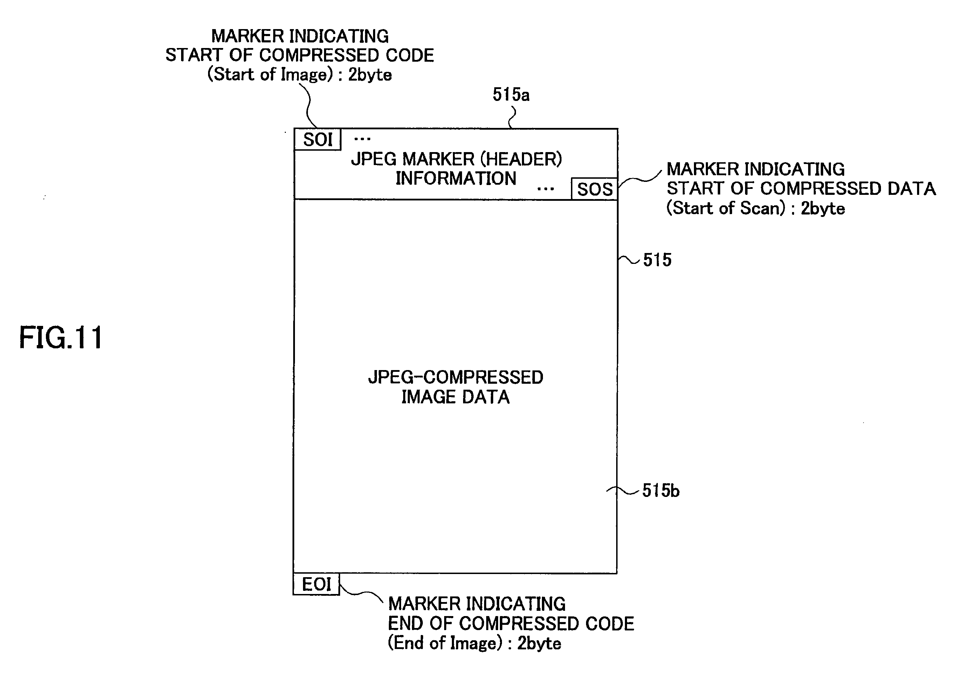

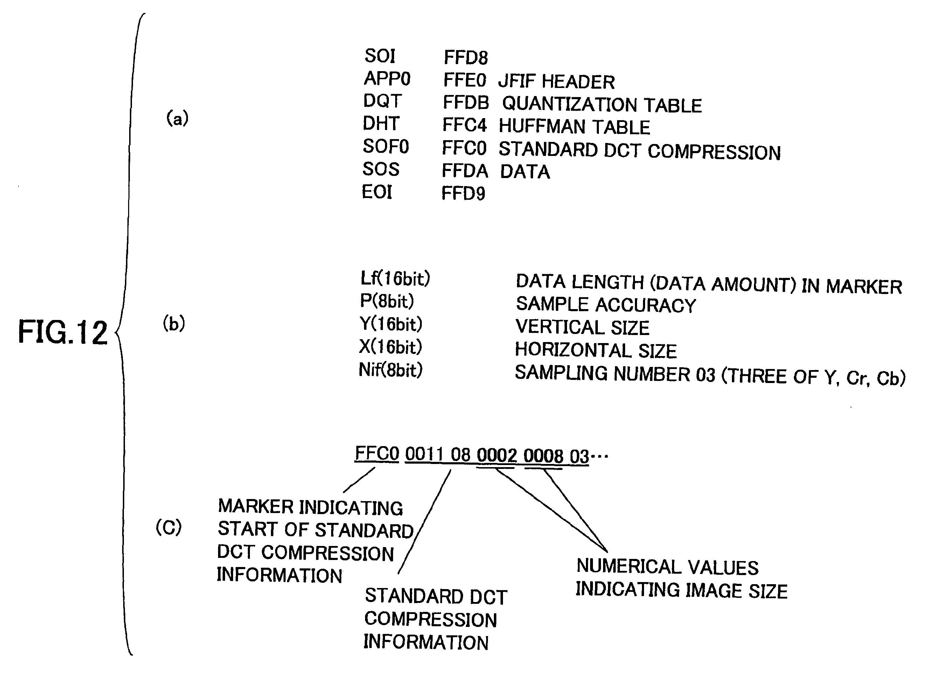

FIG. 11 is a conceptual diagram showing a file format of compressed image data stored in the memory 515. FIG. 12 is an explanatory diagram showing information written into JPEG markers. As shown in FIG. 5, a JPEG file is stored in one area of the memory 515. The JPEG file includes an area into which JPEG markers (header information) 515a are written and an area into which image data 515b are written. For example, as shown in FIG. 12, SOI (Start of Image), which is a marker indicating the start of a compressed code, APPO (JFIF header), DQT (quantization table), DHT (Huffman table), SOFO (standard DCT compression), Appn (application marker), and SOS (Start of Scan), which is a marker indicating the start of compressed data, are written as the JPEG markers 515a. These markers are written by the header information addition part 513 (FIG. 7). Further, EOI (End of Image), which is a marker indicating the end of a compressed code, is added to the end of the compressed image data. The details of the header information are as shown in FIG. 12. In FIG. 12, (a) indicates an example order of markers, and (b) shows the configuration of marker information of standard DCT compression. Size information is shown in the marker information of standard DCT compression. Further, (c) of FIG. 12 shows the sequence of the marker information of standard DCT compression in the case of the number of lines = 16 (0x02) in vertical size and the image width = 64 pixels (0x08) in horizontal size.

Writing of this header information (marker information) is managed by software, and the header information is added by the software after capturing data. The software manages based on which unit, here the number of lines, the captured image data are divided. Accordingly, when a preset amount of data (image width × the number of lines) has been read, marker information is added to the read data. If the amount of data to be read is preset, for example, if the number of main scanning pixels to be read and the number of sub scanning lines to be read are of a standard size, marker information may be created in advance, and the read data may be written to follow the marker information.

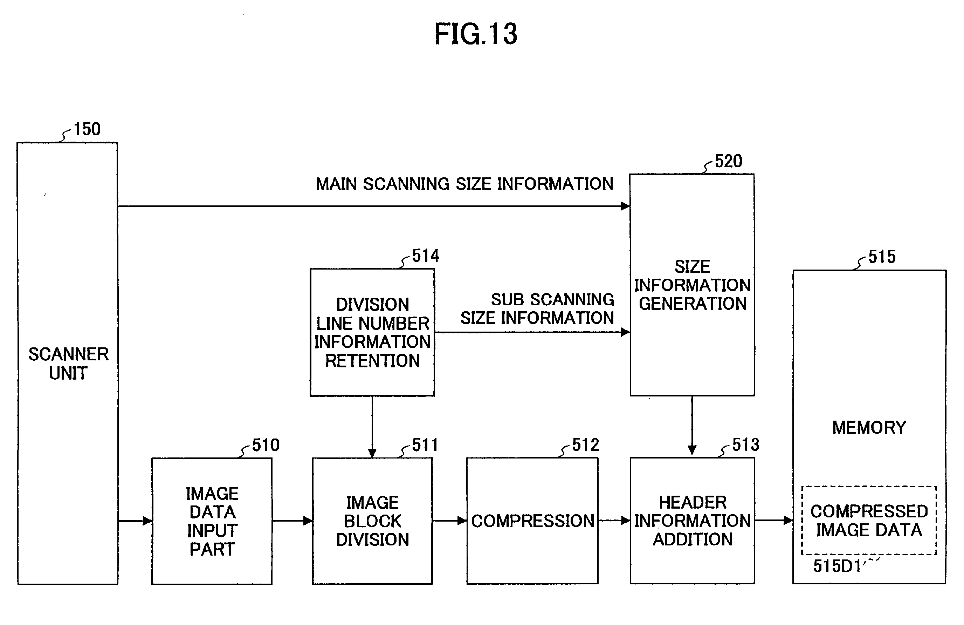

FIG. 13 is a block diagram showing a processing flow in the case of adding the header information 515a. In the case of adding the header information 515a to a file, it is necessary to create size information from the vertical size (sub scanning size information) and the horizontal size (main scanning size information) of an original as shown in FIG. 12. Therefore, according to this embodiment, the sub scanning size information is input to a size information generation part 520 from the division line number information retention part 516, and the main scanning size information is input to the size information generation part 520 from the scanner unit 150. The size information generated in this size information generation part 520 is input to the header information addition part 513 to be transmitted to the memory 515. Accordingly, the files of divided and compressed image data and the header information including the size information are added to the memory 515.

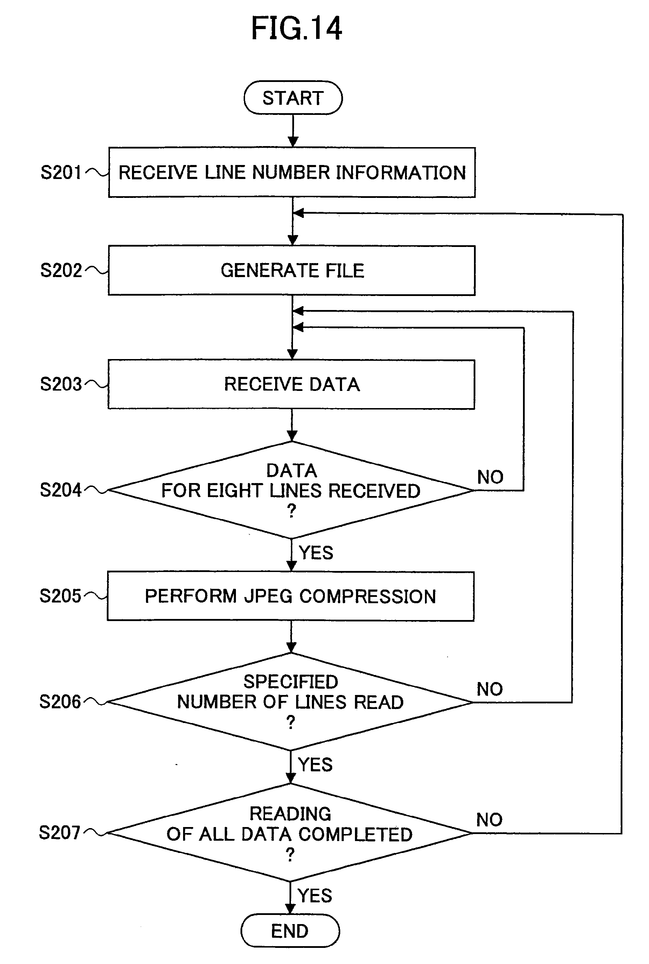

In the case where an instruction on division is given by the operator's operation of FIG. 10 as described above, the size of division can be determined as desired from the operations panel 401. However, if there is no instruction on division, division is performed while treating each 65,535 lines as one file at the time of reading at 600 dpi as shown in FIG. 5. FIG. 14 is a flowchart showing a processing procedure in this case.

Referring to FIG. 14, in step S201, the image data input part 510 receives line number information. Thereafter, in step S202, a file for writing data as shown in FIG. 11 is generated. In step S203, data are received, and every time data for eight lines are received (YES in step S204), in step S205, JPEG compression is performed to compress the received image data. Every time a specified number of lines are read, the operation from step S203 is repeated (step S206), and this is performed until reading of all data is completed (step S207). At this point, if the size of division has been input as described above, a file is generated for every size of division. If the size of division is not specified, division is performed for every 65,535 lines as one file.

At the time of performing such an operation, a reduced image (thumbnail image) for checking the contents of a read image on the operations panel 401 or a PC is simultaneously generated. At this point, the thumbnail image is generated with the same proportion as the divided (divisional) read image.

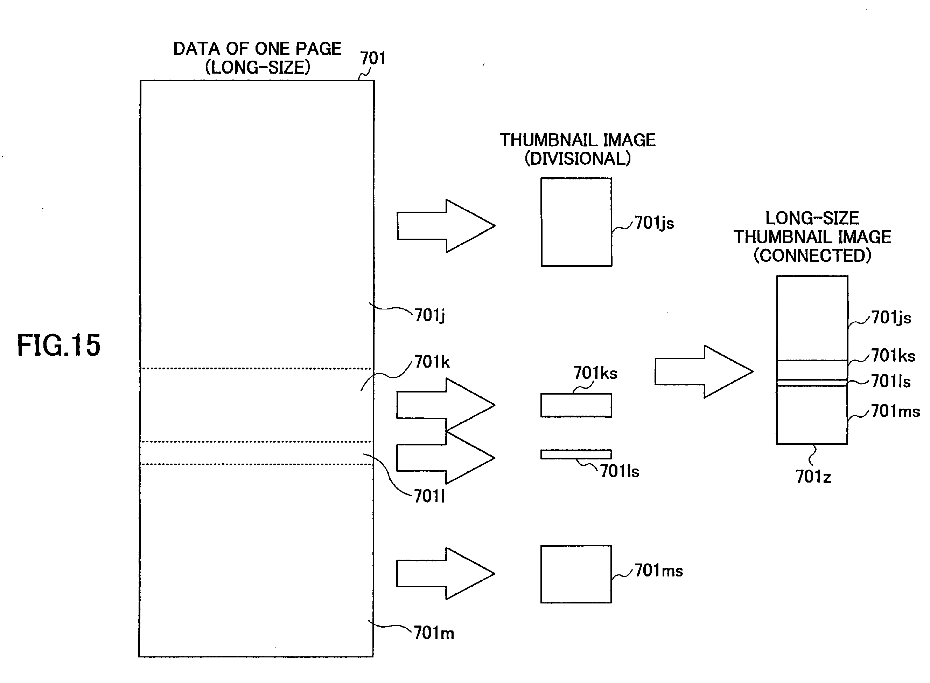

In the case where the division size of the long-size original 701 differs among the first through fourth image division areas 701j, 701k, 7011, and 701m as shown in FIG. 9, if thumbnail images 701js, 701ks, 7011s, and 701ms are generated not with the same proportions as but with proportions independent of the proportions of the corresponding divided (divisional) read images, the thumbnail images 701js, 701ks, 7011s, and 701ms may be difficult to check as images. In the case of FIG. 9, since the first image division area 701j and the thumbnail image generation range (area) do not correspond to each other, it may be impossible to understand the contents of the stored image data without modification. Further, a combination of thumbnail images may not be the same as the original image. In such a case, as shown in FIG. 15, which is an explanatory diagram showing generation of reduced images with the same proportions as corresponding divided (divisional) read images, a thumbnail image is sized so as to be easily checkable as an image irrespective the division size of a read image. In the case of FIG. 15, the thumbnail images 701js, 701ks, 7011s, and 701ms are proportional in size to the amounts of data (numbers of lines) of the corresponding first through fourth image division areas 701j, 701k, 7011, and 701m, respectively, of the long-size original 701. That is, in the case of FIG. 9, the positions of division of the read image and the positions of division of the thumbnail images do not coincide with each other as described above. Accordingly, in the case of reusing read image data, an image 701z in the same aspect ratios as the thumbnail images 701js, 701ks, 7011s, and 701ms is generated by connecting image data and cutting out parts thereof as shown in FIG. 15, and is output to other apparatuses such as a printer and a personal computer.

Further, in the case of generating a thumbnail image in this manner, part of the read image is selected to generate the reduced (thumbnail) image. The image data from which the thumbnail image is generated are provided with an extension flag indicating storage of reference important data. This extension flag is a "thumbnail use flag." In the case of transmitting divided image data to another apparatus, this flag makes it possible to determine from which image data a thumbnail image is generated or from which image data a thumbnail image should be generated.

Further, the position of image data for a thumbnail image can be specified as desired by a user. This position is also input from the operations panel 401 or a PC connected to an image reader. Further, in the case of automatically detecting the generation position of a thumbnail image, part of image data at which the image greatly changes and the rate of data compression is low is selected. As a result, it is possible to avoid a white paper part with no data. Further, it is also possible to later write what number divisional image has important data into the first divisional image as "thumbnail use position information." Here, a description is given taking a thumbnail image as an example, but the same is also the case with a preview image.

The thumbnail use flag and the thumbnail use position information are also recorded in a JPEG marker. For example, "SUM" indicating thumbnail priority display may be added to the JPEG marker of a thumbnail image. In this case, at the time of displaying a list of stored images, thumbnail images including this "SUM" are displayed.

The generation process of a preview image is the same as that of a thumbnail image as shown in FIG. 9. Here, the thumbnail image refers to a small image of the size of a thumb or stamp used in display of a file list, and the preview image refers to a reduced image whose displayed contents can be identified to some extent.

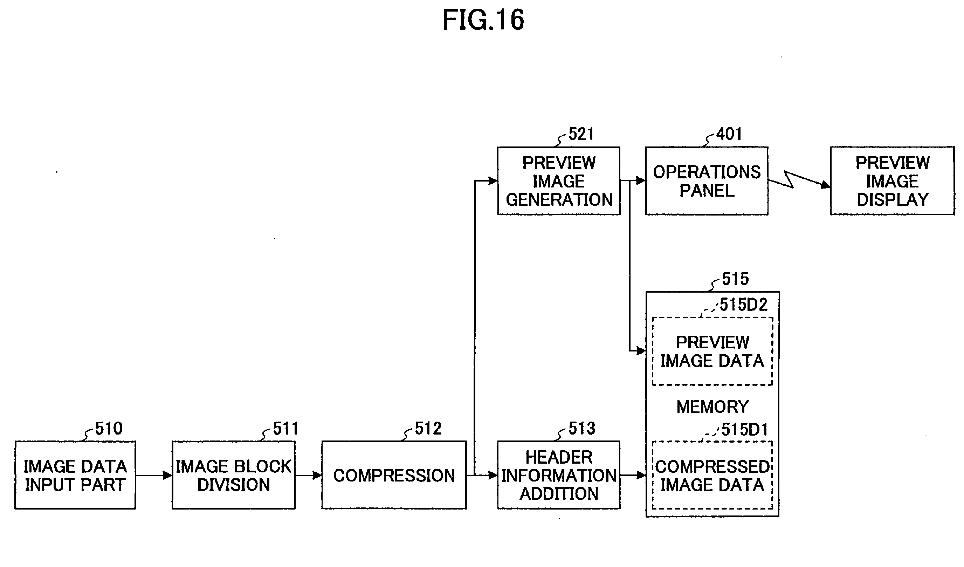

FIG. 16 is a block diagram showing a processing flow in the case of forming a thumbnail image or a preview image. In the following, the thumbnail image is described as the preview image.

As described above referring to FIG. 7, the image data input to the image data input part 510 are divided into blocks in the image block division part 511 and compressed block by block in the compression part 512. The compressed image data are input to the header information addition part 513 and a preview image generation part 521. The compressed image input to the header information addition part 513 has the JPEG marker 515a added thereto as described above to be stored in the memory 515 as the compressed image data 515D1. On the other hand, the compressed image data input to the preview image generation part 521 are transferred to the operations panel 401 and the memory 515. The operations panel (liquid crystal display part) 401 displays a preview image based on the transferred preview image data, and the transferred compressed image data are stored in the memory 515 as preview image data 515D2.

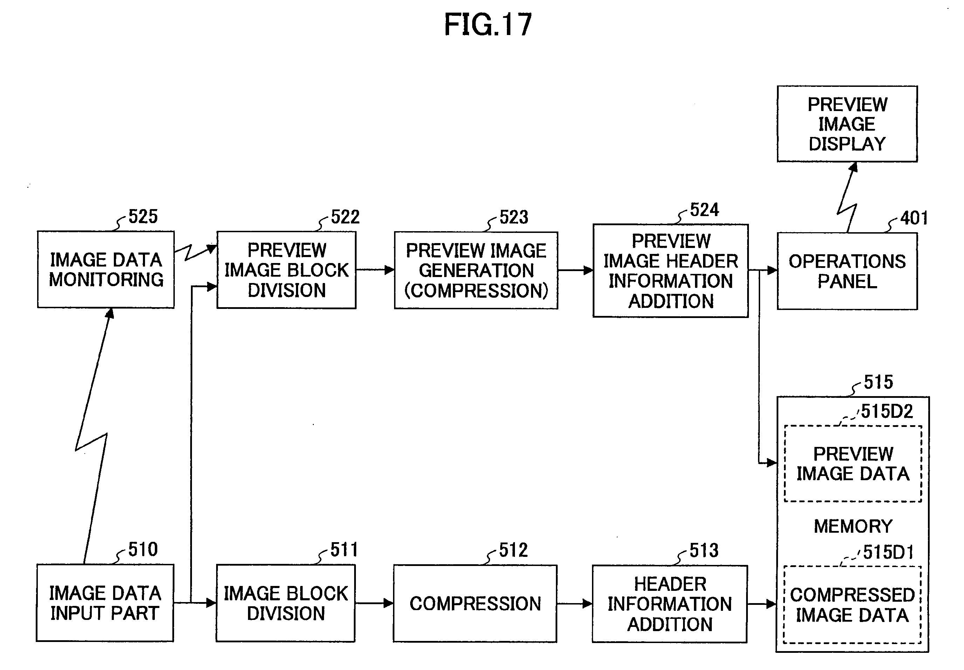

This is a general processing flow represented by the case of equally dividing image data as shown in FIG. 5. The processing is different for the case where the division size (image aspect ratio) of a compressed image and the division size of a preview image on memory are different as shown in FIG. 9. FIG. 17 is a block diagram showing a processing flow corresponding to the processing of FIG. 9. In this case, preview images are generated with a fixed size irrespective of the division sizes of compressed images so as to be aligned or equal in image size, thereby making it easy to check images on the liquid crystal display part 401.

In this case, the image data input to the image data input part 510 are also divided into blocks in the image block division part 511 and compressed block by block in the compression part 512 as described above with reference to FIG. 7. The compressed image data have the JPEG marker 515a regarding division and compression added thereto in the header information addition part 513, and are thereafter stored in the memory 515 as the compressed image data 515D1. On the other hand, the image data input to the image data input part 510 are input to a preview image block division part 522. In a preview image generation part 523, images corresponding to divided (divisional) blocks are compressed into the same image size, so that preview images are generated. The preview images generated into the same size in the preview image generation part 523 have additional information on the preview images added thereto in a preview image header information addition part 524 so as to be transferred to the operations panel 401 and the memory 515. The operations panel (liquid crystal display part) 401 displays the preview images based on the transferred preview image data, and the transferred preview image data are stored in the memory 515 as the preview image data 515D2.

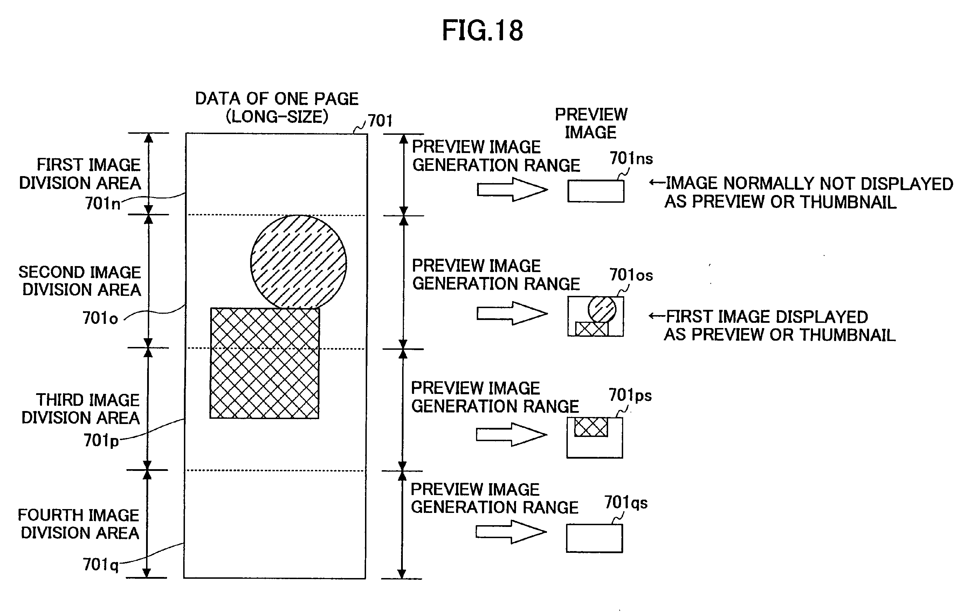

FIG. 18 is a diagram showing an example relationship between an image on a long-size original and a preview image. Originals vary in form. Some have an image averagely formed thereon while others have an image formed on only part thereof or have an image dispersively formed thereon. In the latter case, it does not make much sense to display a preview image or a thumbnail image for a block having no image formed therein except in the case of checking layout. Accordingly, in this case, the period from the start of the long-size original to generation of image data, where there is no change in data, is monitored, and no preview or thumbnail image is displayed for the image data of the period.

In this case, with respect to the image data input to the image data input part 510, a range of no image data is monitored from the start of the long-size original 701 in an image data monitoring part 525, and the monitoring result is transmitted to the preview image block division part 522 as shown in FIG. 17. The preview image block division part 522 determines image division areas based on the image data input thereto from the image data input part 510 and the monitoring result input thereto from the image data monitoring part 525. In this case, the division size is determined based on the division size specified by a user as described above with reference to FIG. 7. In this case, the area up to the first line of an image is determined as a first image division area 701n, and the subsequent area is divided into three blocks determined as second, third, and fourth image division areas 701o, 701p, and 701q. At this point, the image exists in the second and third image division areas 701o and 701p. Therefore, preview images 701os and 701ps are displayed on the liquid crystal display part 401 for the second and third image division areas 701o and 701p, respectively. On the other hand, preview images 701ns and 701qs are not displayed for the first and fourth image division areas 701n and 701q with no image. As a result, only the images of an area with image data that enable the characteristics of the image to be recognized are displayed as the preview images 701os and 701ps, thus making it possible to avoid useless display. Further, combining the preview images 701os and 701ps as shown in FIG. 15 makes it possible to ensure understanding of the image contents of the original 701.

The existence of an image is determined based on a change in input image data, such as a change in the density data of an image, when the image data monitoring part 525 monitors the image data input to the image data input part 510.

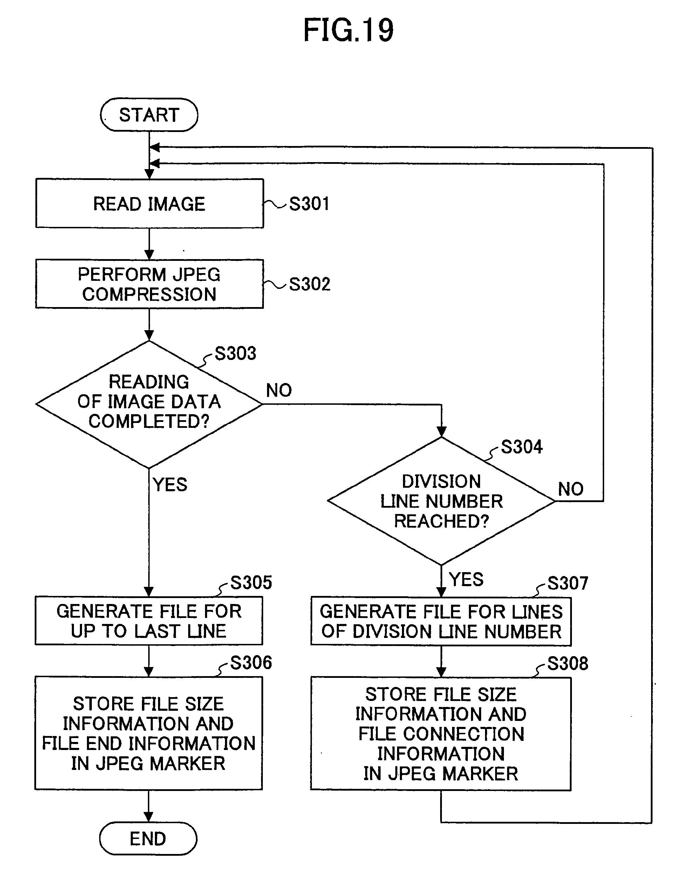

FIG. 19 is a flowchart showing an overall control procedure regarding the above-described JPEG compression executed in the file processing controller 509. In this processing procedure, after reading an image in step S301, JPEG compression is performed on the read image data in step S302. Then, in step S303, it is determined whether reading of the image data is completed. If reading of the image data is not completed (NO in step S303), in step S304, it is determined whether the read image data have reached the number of lines for division (a division line number). If the read image data have not reached the division line number (NO in step S304), the processing returns to step S301 to continue to read the image. If the read image data have reached the division line number (YES in step S304), in step S305, a file for the lines of the division line number is generated, and in step S308, file size information and file connection information are stored in a JPEG marker. Then, the processing of and after step S301 is repeated. On the other hand, if reading of the image data is completed in step S303, in step S305, a file for up to the last line is generated, and in step S306, file size information and file end information are stored in a JPEG marker. Thereby, the processing ends. In step S304, if the read image data have not reached the division line number but are the last block, a necessary number of lines are added as dummy data as described above so that the division line number is reached. Then, the processing proceeds to step S307.

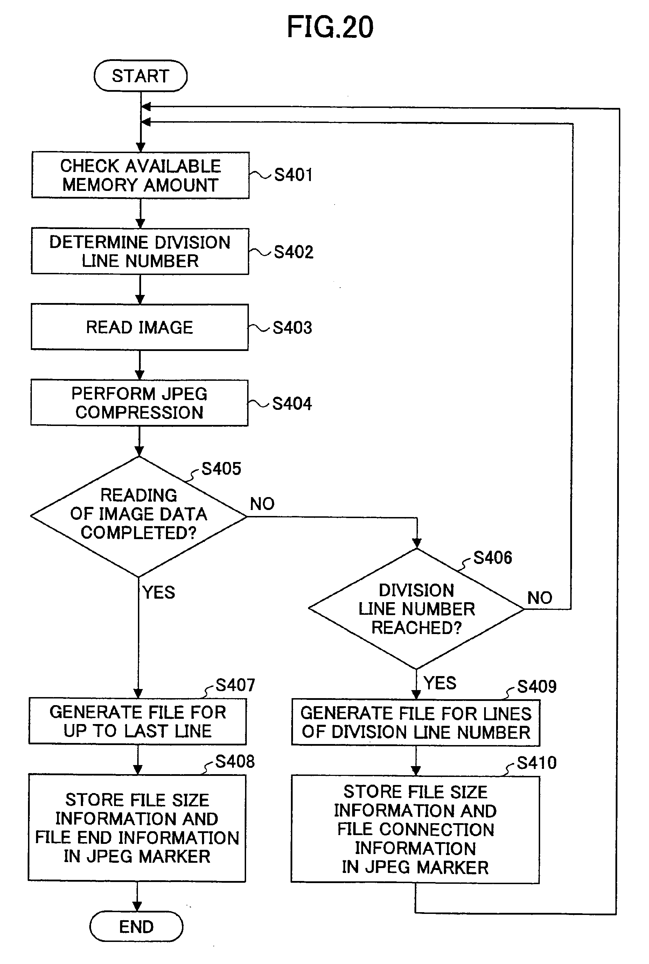

Further, in the case of storing image data, the available capacity of the memory 515 matters as described above. Therefore, according to the flowchart of FIG. 20, first, in step S401, the available capacity of the memory 515 is checked, and in step S402, the number of lines for division (division line number) is determined based on the available capacity. Then, after reading an image (step S403), JPEG compression is performed (step S404). In steps S405 through S410, the same processing as in steps S303 through S308 of the flowchart of FIG. 19 is performed to generate a file for up to the last line and store file size information and file end information in a JPEG marker, thereby ending the processing.

Thus, according to this embodiment, effects such as those described below are produced.
(a) Stored image data can be treated as standard JPEG-compliant. Accordingly, other information apparatuses can also handle read image data without performing special processing thereon.
(b) Image data are handled by JPEG. Accordingly, if the number of pixels of one line is not a multiple of eight with respect to image width, white pixels are added to pixels less than eight pixels as dummy data so as to make it possible to perform compression in units of eight pixels. If the number of lines of the last divisional block is not a multiple of eight, a white image (a sequence of white pixels) is added to the less than eight lines as dummy data. As a result, any image data can be compressed in units of 8 × 8 pixels.
(c) It is possible to specify size of division. Accordingly, it is possible to reduce the amount of memory used at the time of reading an image or reusing a read image.
(d) By reading an image in the same size as a standard size, it is possible to perform memory management with the same processing as for a standard-size original at the time of handling divided (divisional) image data.
(e) It is possible to change size of division based on the available capacity of a memory. Accordingly, it is possible to increase the efficiency of memory usage and to read a long-size original without unnecessary memory addition.
(f) Even if a usable amount of memory for reading is temporarily reduced by interruption by other processing during reading, the reading is prevented from being suspended because it is possible to perform reading while dividing a read image into small sizes.
(g) It is possible to create a reduced image with the same aspect ratio as a divisional image. This makes the image of a file actually stored easily understandable.
(h) It is possible to perform image extraction according to thumbnail display. This makes a reduced image easily viewable.
(i) It is possible to provide a flag (marker) that indicates a position where important data are written in a large-size image. Accordingly, a user can easily identify an image without checking the entire image.
(j) It is possible to later write what number divisional image has important data into the first divisional image. Accordingly, by referring to the information, it is possible to use a read image with ease.

According to one aspect of the present invention, there is provided an image reader reading a long-size original including a division part configured to divide image data of the read long-size original into a plurality of files; a compression part configured to compress the image data divided by the division part by a preset standard method; a storage part configured to store the image data compressed by the compression part; and an addition part configured to add data indicating contents of the image data stored in the storage part to the image data.

According to one aspect of the present invention, there is provided an image forming apparatus including the image reader as set forth above.

According to one aspect of the present invention, there is provided a file management method in an image reader reading and managing a long-size original, the method including dividing image data of the read long-size original into a plurality of files; compressing the divided image data by a preset standard method; adding data indicating contents of the compressed image data to the compressed image data and storing the compressed image data; and specifying a necessary image based on the data indicating the contents upon reading the stored image data.

According to one aspect of the present invention, the image data of a read long-size original are divided into multiple files, the divided image data are compressed by a preset standard method, and the compressed image data are stored with data indicating the contents of the image data being added thereto. Accordingly, the read image of the long-size original, which is an image over standard management size, can be handled with a standard image format that can be handled in other printers or personal computers.

In the above-described image reader, the division part and the file size determination part may correspond to the image block division part 511, the compression part may correspond to the compression part 512, the storage part may correspond to the memory 515, and the addition part may correspond to the header information addition part 513.

The present invention is not limited to the specifically disclosed embodiment, and variations and modifications may be made without departing from the scope of the present invention.

## Claims

1. An image reader for reading a long-size original, **characterized by**:
a division part configured to divide image data of the read long-size original into a plurality of files;
a compression part configured to compress the image data divided by the division part by a preset standard method;
a storage part configured to store the image data compressed by the compression part; and
an addition part configured to add data indicating contents of the image data stored in the storage part to the image data.

2. An image reader as claimed in claim 1, **characterized in that** when a number of pixels of a pixel width of one line of the long-size image is not a multiple of a number of pixels of a compression unit in the standard method of the compression part, the division part fills a necessary number of pixels for making the number of pixels the multiple with dummy data so as to perform the division.

3. An image reader as claimed in claim 1 or 2, **characterized in that** when a number of lines of a last divisional block of the long-size original is not a multiple of a number of pixels of a compression unit in the standard method of the compression part, the division part fills a necessary number of lines for making the number of lines the multiple with dummy data so as to perform the division.

4. An image reader as claimed in any of claims 1 to 3, further **characterized by**:
a file size determination part configured to determine a size of the files into which the image data of the read long-size image are divided by the division part.

5. An image reader as claimed in claim 4, **characterized in that** the size of the files is equal to a maximum read length of a standard size.

6. An image reader as claimed in claim 4, **characterized in that** the file size determination part is configured to change an image size for performing the compression in accordance with a usable capacity of the storage part.

7. An image reader as claimed in any of claims 1 to 6, **characterized in that** the division part is configured to generate a reduced image by equally dividing a read image of the long-size original.

8. An image reader as claimed in any of claims 1 to 6, **characterized in that** the division part is configured to generate a reduced image in an easily viewable size irrespective of a size of a read image of the long-size original.

9. An image reader as claimed in claim 7 or 8, **characterized in that** the reduced image is a thumbnail image.

10. An image reader as claimed in claim 7 or 8, **characterized in that** the reduced image is a preview image.

11. An image reader as claimed in any of claims 7 to 10, **characterized in that** the addition part is configured to add a marker to the image data, the marker indicating existence of an original image for creating the reduced image.

12. An image reader as claimed in any of claims 1 to 11, **characterized in that** the preset standard method is JPEG.

13. An image forming apparatus, **characterized by**:
the image reader as set forth in any of claims 1 to 12.

14. A file management method for use in an image reader for reading and managing a long-size original, the method **characterized by**:
dividing image data of the read long-size original into a plurality of files;
compressing the divided image data by a preset standard method;
adding data indicating contents of the compressed image data to the compressed image data and storing the compressed image data; and
specifying a necessary image based on the data indicating the contents upon reading the stored image data.

15. A file management method as claimed in claim 14, **characterized in that** in the dividing, when a number of pixels of a pixel width of one line of the long-size image is not a multiple of a number of pixels of a compression unit in the standard method used in the compressing, a necessary number of pixels for making the number of pixels the multiple are filled with dummy data so as to perform the dividing.

16. A file management method as claimed in claim 14 or 15, **characterized in that** in the dividing, when a number of lines of a last divisional block of the long-size original is not a multiple of a number of pixels of a compression unit in the standard method used in the compressing, a necessary number of lines for making the number of lines the multiple are filled with dummy data so as to perform the dividing.

17. A file management method as claimed in claim 14, **characterized in that** the data indicating the contents indicate what number divisional image has important data; and
the data indicating the contents are later written into a first divisional image.
